(19) Europäisches Patentamt
European Patent Office
Office européen des brevets

(11) EP 2 117 735 B1

# (12) FASCICULE DE BREVET EUROPEEN

(45) Date de publication et mention de la délivrance du brevet:
**12.01.2011 Bulletin 2011/02**

(21) Numéro de dépôt: **08762181.9**

(22) Date de dépôt: **29.02.2008**

(51) Int Cl.:
***B08B 17/06*** *(2006.01)* ***G02B 1/10*** *(2006.01)*

(86) Numéro de dépôt international:
**PCT/FR2008/050350**

(87) Numéro de publication internationale:
**WO 2008/116994 (02.10.2008 Gazette 2008/40)**

(54) **ARTICLE AYANT UNE SURFACE NANOTEXTUREE A PROPRIETES SUPERHYDROPHOBES**

ARTIKEL MIT NANOSTRUKTURIERTER OBERFLÄCHE UND SUPERHYDROPHOBEN EIGENSCHAFTEN

ARTICLE HAVING A NANOTEXTURED SURFACE WITH SUPERHYDROPHOBIC PROPERTIES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **02.03.2007 FR 0753631**

(43) Date de publication de la demande:
**18.11.2009 Bulletin 2009/47**

(73) Titulaires:
- **Essilor International (Compagnie Générale D’Optique) 94220 Charenton le Pont (FR)**
- **Centre National de la Recherche Scientifique 75794 Paris Cedex 16 (FR)**

(72) Inventeurs:
- **REYSSAT, Mathilde** Somerville, Massachusetts 02143 (US)
- **CHEN, Yong** F-91460 Marcoussis (FR)
- **PEPIN, Anne** F-75794 Paris Cedex 16 (FR)
- **QUERE, David** F-75231 Paris Cedex 05 (FR)
- **BIVER, Claudine** F-94220 Charenton-le-pont (FR)
- **VAGHARCHAKIAN, Laurianne** F-94220 Charenton-le-pont (FR)

(74) Mandataire: **Catherine, Alain et al**
**Cabinet Harlé & Phélip**
**7 rue de Madrid**
**75008 Paris (FR)**

(56) Documents cités:
**EP-A2- 1 249 476** **WO-A-2006/008153**
**US-A1- 2004 208 791**

- **ELENA MARTINES,KRIS SEUNARINE,HYWEL MORGAN,NIKOLAJ GADEGAARD,CHRIS D. W. WILKINSON,MATHIS O. RIEHLE: "superhydrophobicity and superhydrophilicity of regular nanopatterns" NANO LETTERS, vol. 5, no. 10, 2005, pages 2097-2103, XP002454274 cité dans la demande**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 117 735 B1

## Description

La présente invention concerne d'une manière générale un article, notamment un article d'optique telle qu'une lentille ophtalmique, ayant des propriétés superhydrophobes.

Dans de nombreuses applications, notamment en optique et plus particulièrement en optique ophtalmique, il est souhaitable de réaliser des articles ayant une surface hydrophobe pour éviter l'accrochage de gouttes d'eau à la surface de l'article et en faciliter le nettoyage. Ainsi, dans le cas de lentilles ophtalmiques, notamment de verres de lunettes, il est classique de déposer en final sur le verre un revêtement hydrophobe pour réduire l'accrochage sur la surface du verre de gouttes d'eau, par exemple des gouttes de pluie, rendant ainsi le verre moins salissant et en facilitant le nettoyage lorsqu'il est souillé notamment par des gouttes de pluie.

Classiquement, de tels revêtements hydrophobes, notamment dans le cas de revêtements anti-salissures de lentilles ophtalmiques, comprennent des composés fluorés, tels que des fluorosilanes et des fluorosilazanes. De tels revêtements sont décrits, entre autres, dans les brevets US-6,277,485 et 6,183,872 et dans la demande de brevet international publiée WO 2006/049020. Les meilleurs revêtements hydrophobes lorsqu'ils sont non texturés (surface lisse) permettent d'obtenir des angles de contact avec l'eau de 110-120°.

De manière générale, une surface est considérée comme hydrophobe lorsqu'elle présente un angle de contact avec l'eau > 90°. Typiquement, les surfaces hydrophobes classiques ont des angles de contact avec l'eau de plus de 90° à 120°. Une surface est considérée comme superhydrophobe lorsqu'elle présente un angle de contact avec l'eau supérieur à 120 °, de préférence de 130 à 160° ou plus.

Il est connu qu'une surface hydrophobe lisse peut être rendue superhydrophobe en la rendant rugueuse. La rugosité de la surface a pour effet un piégeage d'air dans la structure, et une goutte d'eau repose alors sur une surface composite faite de solide et d'air. Cet effet, couramment appelé effet "fakir" permet d'atteindre des angles de contact élevés (~ 160°) et une hystérésis de l'angle de contact assez faible (inférieure à 30°, voire à 10°).

Ainsi la demande de brevet US-2005/0136217 décrit un procédé de préparation de surfaces auto-nettoyantes ayant des saillies et des creux, la distance entre les saillies étant de 0,1 à 200μm et la hauteur des saillies étant de 0,1 à 100μm. Plus particulièrement, le procédé décrit dans la demande ci-dessus consiste à déposer une solution, dispersion ou émulsion d'un matériau hydrophobe qui après enlèvement du solvant donne naissance à des saillies de forme tubulaire. Mais, outre le fait que les hauteurs des saillies peuvent être dans le domaine nanométrique et/ou micrométrique, pour une même surface texturée cette hauteur peut varier considérablement ce qui conduit à une grande inhomogénéité des propriétés hydrophobes de la surface.

De plus, dans le cas de surfaces hydrophobes aux textures micrométriques, un problème associé à ces surfaces est l'empalement des gouttes d'eau dans les interstices de la surface texturée. Ainsi, lorsque des gouttes d'eau de taille 100 μm ou moins viennent frapper la surface texturée, elles peuvent pénétrer, au moins en partie, dans les interstices entre les plots (effet d'empalement) et s'y trouvent piégées. En s'évaporant, les gouttes laissent des salissures à l'intérieur des interstices qui sont alors difficile à éliminer.

L'article "Superhydrophobicity and superhydrophilicity of regular nanopatterns" E. Martines et al. NANOLETTERS 2005. Vol. 5, No 10 2097-2103 décrit des surfaces nanostructurées superhydrophobes comportant un réseau de plots cylindriques ayant les caractéristiques suivantes :

- fraction surfacique des plots $\varnothing_s$ (rapport de l'aire occupée par les plots sur l'aire totale de la surface) = 13%
- hauteur des plots h = 268 nm
- pas du réseau p (distance centre à centre entre les plots) = 300nm
- diamètre des plots d = 124 nm

Cet article mentionne que, pour un pas donné, l'accroissement du rapport de forme h/d conduit à la meilleure configuration hydrophobe. Ainsi, un réseau pour lequel d = 117 nm, h = 792 nm et p = 300 nm a une excellente configuration hydrophobe.

Mais, de grandes hauteurs de plots ont pour inconvénient de rendre le réseau extrêmement fragile du point de vue mécanique, et aussi par conséquent, du point de vue de ses propriétés hydrophobes. En outre, des plots de grande hauteur peuvent nuire aux qualités optiques du revêtement.

La présente invention a donc pour objet de fournir un article, notamment un article d'optique telle qu'une lentille ophtalmique pour des lunettes, ayant une surface nanotexturée superhydrophobe remédiant aux inconvénients de l'art antérieur, en particulier moins fragile que les surfaces de l'art antérieur.

La présente invention a encore pour objet un article tel que défini ci-dessus qui présente une bonne résistance à l'empalement de gouttes d'eau.

Les buts ci-dessus sont atteints selon l'invention en fournissant un article ayant une surface nanotexturée à propriétés superhydrophobes comportant un réseau de plots verticaux, de préférence réguliers, **caractérisé en ce que** le réseau de plots satisfait les conditions suivantes :

- la fraction surfacique des plots $\varnothing_s$ est telle que 3% ≤ $\varnothing_s$ ≤ 13%, de préférence 5% ≤ $\varnothing_s$ ≤ 13%, mieux 5,5% ≤ $\varnothing_s$ ≤ 13%, mieux 6% ≤ $\varnothing_s$ ≤ 13% et mieux encore 8% ≤ $\varnothing_s$ ≤ 13% ;

Parmi les gammes préférentielles on peut citer 5% ≤ $\varnothing_s$ ≤ 12%, et mieux encore 6% ≤ $\varnothing_s$ ≤ 12% ; 7% ≤ $\varnothing_s$ ≤ 12% ; 5% ≤ $\varnothing_s$ ≤ 10% et mieux encore 8% ≤ $\varnothing_s$ ≤ 10% ;

- le pas p du réseau est tel que 100nm ≤ p ≤ 250 nm ;
- la hauteur des plots h est telle que 100 nm ≤ h ≤ 400 nm, de préférence 250 nm ≤ h ≤ 400 nm, mieux 300 ≤ h ≤ 400 nm ;

Parmi les gammes préférées on peut également citer la gamme 150 nm ≤ h ≤ 350 n m ; et

- la surface latérale des plots fait au plus un angle de ± 20°, de préférence ± 10°, mieux ± 5° par rapport à l'axe vertical des plots.

Par régulier, on entend des plots qui sont sensiblement de même forme et de même hauteur.

De façon surprenante, alors qu'on se serait normalement attendu en raison de la réduction de hauteur des plots à une diminution de la résistance à l'empalement de gouttes d'eau, les réseaux nanométriques selon l'invention présentent une excellente résistance à l'empalement.

Les réseaux de plots selon l'invention peuvent être périodiques ou aléatoires, de préférence aléatoires.

La surface de base peut être plane ou courbe, mais est de préférence plane, au moins dans les espaces entre les plots.

Les plots selon l'invention peuvent prendre des formes diverses : typiquement parallélépipèdique, cylindrique éventuellement avec un sommet arrondi, conique éventuellement avec un sommet arrondi, tronconique (plots tronqués à leur sommet), pyramidale, éventuellement avec un sommet arrondi, pyramidale tronqué.

Le diamètre des plots cylindriques avec un sommet arrondi nécessaire pour déterminer le paramètre $\varnothing_s$, est mesuré à la base du sommet arrondi des plots, et est généralement de 50 à 100nm, préférentiellement supérieur à 50 nm, mieux égal ou supérieur à 60 nm, mieux le diamètre varie de 60 à 90nm.

A défaut, le diamètre est mesuré au ¾ de la hauteur du plot à partir de la base.

Dans le cas de plots parallélépipédiques, pyramidaux, en troncs de pyramide, coniques ou tronconique, le plus grand côté ou le diamètre est mesuré au ¾ de la hauteur, en partant de la base du plot, et est généralement de 50 à 100 nm, préférentiellement supérieur à 50 nm, mieux égal ou supérieur à 60 nm ; mieux le plus grand côté ou le diamètre varie de 60 à 90 nm.

Typiquement, dans le cas de réseaux périodiques :

$\varnothing_s$ = a2/p2 pour des plots parallélépipédiques de section carrée,
$\varnothing_s$ = πd2/4p2 pour des plots cylindriques.

Dans le cas d'un réseau aléatoire on peut utiliser ces formules en remplaçant le pas "p" par la valeur moyenne de la distance centre-à-centre des plots.

Dans le cas des réseaux aléatoires, la valeur de $\varnothing_s$ est également calculée en sommant la surface de section de tous les plots d'un échantillon représentatif, (surface de la section calculée à partir des côtés et diamètres mesurés comme indiqué précédemment) notamment d'un échantillon d'au moins 100 plots, et divisant par la surface totale de l'échantillon.

La rugosité r de la surface nanotexturée est le rapport de la surface réelle à la surface apparente et est liée aux paramètres géométriques du réseau :

$r = 1 + \pi\, dh/p^2$ (plots cylindriques ou tronconiques, avec d=diamètre des plots à la base de leur sommet arrondi pour le plot cylindrique ou au ¾ de la hauteur, en partant de la base du plot, pour le plot tronconique, h=hauteur des plots et p= pas du réseau).

$r = 1 + 4ah/ p^2$ (plots parallélépipédiques de section carrée, avec a=côté du plot, h=hauteur du plot et p = pas du réseau).

Les réseaux de plots selon l'invention ont en général une rugosité r ≥ 2 (qui assure que l'état fakir est favorisé par le système) et de préférence satisfaisant la condition :

$$2,5 \leq r \leq 3,5.$$

L'angle de Young $\theta_y$ est l'angle de contact théorique d'une goutte de liquide (ici de l'eau désionisée) sur une surface lisse (non texturée) d'un substrat et est défini par la relation :

$$\cos\theta_y = \frac{\gamma_{SV} - \gamma_{SL}}{\gamma}$$

Où $\gamma_{SV}$ et $\gamma_{SL}$ sont les énergies de surface aux interfaces solide/vapeur et solide/liquide respectivement et $\gamma$ est la tension superficielle de l'eau pure (72mN/m).

Si l'angle de Young $\theta_y$ est théoriquement bien défini, en pratique l'angle de contact est compris entre deux valeurs limites. En effet si l'on gonfle une goutte d'eau, l'angle de contact commence par augmenter sans que la ligne de contact de la goutte apparemment ne bouge. L'angle de contact augmente jusqu'à atteindre une valeur maximum $\theta_a$ où la ligne de contact commence à bouger. Cet angle $\theta_a$ est appelé « angle d'avancée ».

Au contraire, si l'on pompe du liquide dans une goutte, on observe une diminution de l'angle de contact jusqu'à une valeur minimum $\theta_r$ où la ligne de contact commence à reculer. Cet angle $\theta_r$ est appelé « angle de reculée ».

La différence entre l'angle d'avancée et l'angle de reculée ($\Delta\theta=\theta_a-\theta_r$) est l'hystérésis de l'angle de contact et est souvent proche de $\theta_a$.

L'angle de Young $\theta_y$ se trouve entre les angles $\theta_a$ et $\theta_r$. Lorsque l'hystérésis $\Delta\theta \leq 10°$ de préférence $\Delta\theta \leq 5°$, on peut admettre que l'angle de Young $\theta_y$ d'une surface lisse (non texturée) du matériau est équivalent à

$$\frac{\theta_a + \theta_r}{2}$$

Dans le cadre de la présente invention, les angles d'avancée et de reculée sont mesurés au moyen d'un goniomètre équipé d'une seringue d'injection/pompage en déposant sur les surfaces une goutte d'eau désionisée de 15 $\mu$L, puis en effectuant un gonflement et un dégonflement de la goutte d'eau à un débit de 20$\mu$L/minute. De préférence l'angle $\alpha$, mesuré au ¾ de la hauteur h des plots en partant de la base , que fait un plan perpendiculaire à l'axe vertical des plots avec la surface latérale du plot est tel que $\alpha < \theta_y$. En général, cet angle $\alpha$ sera compris entre 70° et 120°.

La hauteur h des plots des surfaces nanotexturées de l'invention étant inférieure aux longueurs d'onde de la lumière visible (400-800 nm), le risque de diffraction et de problèmes optiques est réduit.

La surface nanotexturée de l'invention peut être réalisée dans un substrat hydrophobe ou dans un substrat qui est revêtu après formation de la surface nanotexturée d'une couche mince d'un matériau hydrophobe.

Le revêtement peut être total ou partiel. Lorsqu'il est partiel il recouvre la partie supérieure des plots. De préférence le revêtement hydrophobe recouvre la totalité de la surface nanotexturée.

Ces revêtements ont en général une épaisseur inférieure ou égale à 10 nm, de préférence de 1 à 10 nm, mieux de 1 à 5 nm.

Il s'agit généralement de revêtements de type fluorosilane ou fluorosilazane. Ils peuvent être obtenus par dépôt d'un fluorosilane ou fluorosilazane précurseur, comprenant de préférence au moins deux groupes hydrolysables par molécule. Les fluorosilanes précurseurs contiennent préférentiellement des groupements fluoropolyéthers et mieux des groupements perfluoropolyéthers. Ces fluorosilanes sont bien connus et sont décrits, entre autres, dans les brevets US 5,081,192, US 5,763,061, US 6,183, 872, US 5,739, 639, US 5,922,787, US 6,337,235, US 6,277,485 et EP 0933377.

Des fluorosilanes particulièrement adaptés pour former des revêtements hydrophobes sont ceux contenant des groupements fluoropolyéthers décrits dans le brevet US 6,277,485.

Ces fluorosilanes répondent à la formule générale :

$$R_F \left[ R^1 - SiY_{3-x}R^2_x \right]_y$$

dans laquelle $R_F$ est un groupe polyfluoropolyéther monovalent ou divalent, $R^1$ est un groupe divalent alkylène, arylène ou une combinaison de ceux-ci, contenant éventuellement un ou plusieurs hétéroatomes ou groupes fonctionnels et éventuellement substitués par des halogènes, et contenant de préférence 2 à 16 atomes de carbone ; $R^2$ est un groupe

alkyle inférieur (c'est-à-dire un groupe alkyle en $C_1$-$C_4$) ; Y est un atome d'halogène, un groupe alkoxy inférieur (c'est-à-dire une groupe alkoxy en $C_1$-$C_4$, de préférence méthoxy ou éthoxy), ou un groupe acyloxy inférieur (c'est-à-dire -OC(O)$R^3$ où $R^3$ est un groupe alkyle en $C_1$-$C_4$) x est 0 ou 1, et éventuellement 2 ; et y est 1 ($R_F$ est monovalent) ou 2 ($R_F$ est divalent). Les composés appropriés ont en général une masse molaire moyenne en nombre d'au moins 1000. De préférence, Y est un groupe alkoxy inférieur et $R_F$ est un groupe perfluoropolyéther.

D'autres fluorosilanes recommandés sont ceux de formule :

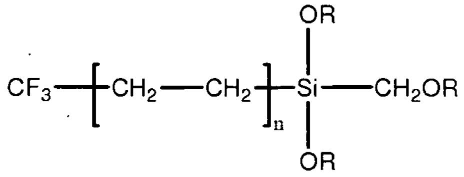

où n = 5, 7, 9 ou 11 et R est un groupe alkyle, de préférence en $C_1$-$C_{10}$ tel que - $CH_3$, -$C_2H_5$ et -$C_3H_7$ ;

$CF_3(CF_2)_5CH_2CH_2Si(OC_2H_5)_3$ ((tridécafluoro-1,1,2,2-tétrahydro)octyltriéthoxysilane) ;

$CF_3CH_2CH_2SiCl_3$ ;

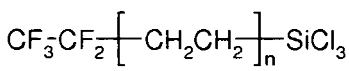 ;

et

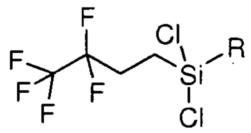

où n = 7 ou 9 et R est tel que défini ci-dessus.

Des compositions contenant des fluorosilanes également recommandés pour la préparation de revêtements hydrophobes et/ou oléophobes sont décrites dans le brevet US 6,183,872. Elles contiennent des fluoropolymères à groupements organiques porteurs de groupes à base de silicium représentés par la formule générale suivante et ayant une masse moléculaire de $5.10^2$ à $1.10^5$ :

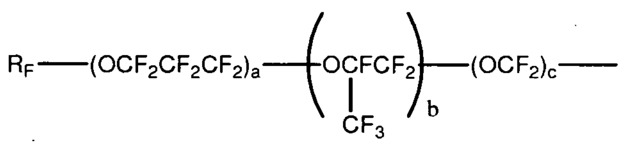

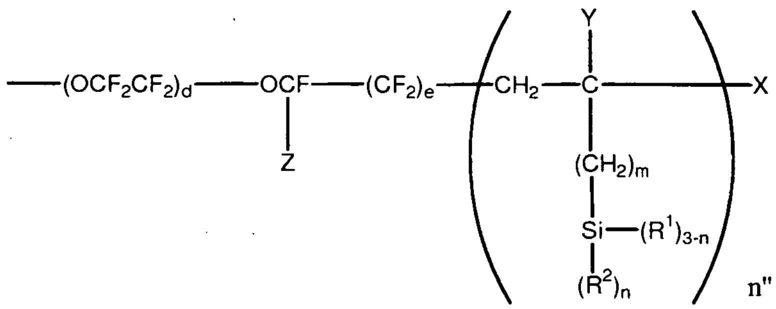

dans laquelle $R_F$ représente un groupement perfluoroalkyle ; Z représente un groupe fluoro ou trifluorométhyle ; a, b, c, d et e représentent chacun, indépendamment l'un de l'autre, 0 ou un entier supérieur ou égal à 1, à la condition que la somme a+b+c+d+e ne soit pas inférieure à 1 et que l'ordre des unités répétitives figurant entre les parenthèses indexées sous a, b, c, d et e ne soit pas limité à celui représenté ; Y représente H ou un groupe alkyle comprenant de 1 à 4 atomes de carbone ; X représente un atome d'hydrogène, de brome ou d'iode ; $R^1$ représente un groupe hydroxyle ou un groupe hydrolysable ; $R^2$ représente un atome d'hydrogène ou un groupement hydrocarboné monovalent ; m représente 0,1 ou 2 ; n représente 1, 2 ou 3 ; et n" représente un entier au moins égal à 1, préférentiellement au moins égal à 2.

Des compositions de revêtement hydrophobe fluoré telles que décrites ci-dessus sont commercialisées sous les dénominations KP 801M® (Shin-Etsu Chemical), OPTOOL DSX® (Daikin Industries) et KY 130 (Shin-Etsu Chemical). Bien évidemment, on peut également utiliser des mélanges de ces compositions.

Bien évidemment, dans le cas d'articles d'optiques, la surface nanotexturée peut être formée sur un substrat de lentille nu ou revêtu d'un ou plusieurs revêtements fonctionnels tels que des revêtements anti-chocs, anti-abrasion et/ou anti-rayures et anti-reflets. La lentille peut être également colorée ou photochromique.

Il est également possible de préparer la surface nanostructurée selon l'invention puis de transférer celle-ci sur un moule, le moule obtenu comportant une surface qui est alors la réplique inverse de la surface nanostructurée.

Le moule obtenu qui peut être un moule rigide, ou préférentiellement un moule souple, sera lui-même utilisé pour transférer une réplique de la surface nanostructurée sur un article d'optique, typiquement en appliquant une composition durcissable à la surface de l'article ou du moule microstructuré et en pressant le moule et l'article l'un contre l'autre, puis en durcissant la composition.

Il est aussi possible d'utiliser le moule à surface nanostructurée dans des opérations de fabrication d'article optique moulé dans lequelles on vient couler et durcir le matériau du substrat dans le moule à surface nanostructurée.

La surface du moule nanostructurée peut préalablement avoir été revêtue d'un ou plusieurs revêtements tels que revêtement hydrophobe et/ou oléophobe, anti-abrasion, anti-chocs.

Des procédés de transfert de nanostructures sont décrits dans les brevets US6491851 et EP1551611.

Les surfaces nanotexturées selon l'invention s'avèrent particulièrement intéressantes comme surfaces anti-pluie, c'est-à-dire des surfaces favorisant l'évacuation des gouttes de pluie et évitant leur empalement sur la surface, réduisant ainsi le dépôt de salissures sur la surface. De telles surfaces sont particulièrement avantageuses pour des articles d'optique, notamment des lentilles ophtalmiques et en particulier des verres de lunette, grâce à leur propriété de faible accrochage des gouttes de pluie et d'aptitude à l'élimination rapide de ces gouttes.

L'invention vise donc également l'utilisation d'une surface nanostructurée telle que décrite précédemment pour conférer des propriétés ani-pluie à la surface d'un article, notamment d'optique telle qu'une lentille ophtalmique et plus spécifiquement un verre de lunette.

La suite de la description se réfère aux figures annexées qui représentent respectivement :

Figure 1 : une photomicrographie d'une surface de silicium nanotexturée selon l'invention (réseau n°1) ; et
Figure 2 : un schéma du dispositif de détermination de la résistance à l'impact de gouttes.

L'exemple suivant illustre la présente invention, sans toutefois la limiter.

**Exemple**

On a réalisé sur une surface d'un substrat échantillon de silicium un réseau périodique nanotexturé revêtus d'une couche de matériau hydrophobe selon l'invention ayant les caractéristiques suivantes :

Réseau n°1 :

pas (p) = 200 nm
fraction surfacique des plots ($\varnothing_s$) = $\pi d^2/4p^2$=11%
rugosité (r) = 3.0
géométrie des plots : cylindres sommet rond

- diamètre (d) = 75nm
- hauteur (h) = 350nm

Le substrat-échantillon est un carré de 3cm x 3cm dont 1cm$^2$ au centre est texturé.

**Fabrication du réseau texturé.**

1. On revêt par dépôt centrifuge une galette de silicium d'une solution à 30g/l, dans la méthylisobutylcétone, de poly (méthacrylate de méthyle) (PMMA) pendant 30s à une vitesse de rotation de 4000 t/min et une accélération 3000t/min. L'épaisseur finale du revêtement obtenu est de 150 nm.
2. La galette revêtue est mise en étuve pendant 30 minutes à 180°.
3. La face revêtue de la galette est alors insolée selon le motif désiré au moyen d'un faisceau électronique commandé par ordinateur (masqueur électronique Leica).
4. La couche insolée est ensuite développée pendant 45 s dans une solution de méthylisobutylcétone/isopropanol 1/3 en volume.
5. On dépose alors une couche de chrome de 40 nm. (dépôt classique sous vide).
6. On élimine la couche de PMMA par traitement à l'acétone le chrome déposé sur le silicium reste intact, alors que celui qui est au dessus de la résine s'élimine avec elle.
7. On grave le silicium par gravure ionique réactive (RIE) sous programme DPSI ( 4 sccm de $SF_6$- 8sccm de $CHF_3$ - pression 10 mTorr - Puissance RF=15 watts) pendant 7 minutes à une vitesse de gravure de 50nm/min pour obtenir une profondeur de gravure de 350 nm.(sccm = standard cubic centimeters per minutes à 0°C et 101, 325 kPa.)
8. On élimine la couche de chrome par voie chimique par trempage de l'échantillon dans une solution commerciale dénommée Cr-etch® (Chrome etch 3144 (Honeywell), mélange d'acide perchlorique et d'ammonium-cerium (IV) nitrate).

**Dépôt de la couche mince hydrophobe**

On dépose alors par évaporation une couche de matériau hydrophobe d'épaisseur physique de 2 nm (OPTOOL DSX®) dans les conditions suivantes :

- mise sous vide de l'enceinte par pompage jusqu'à une pression de $3.10^{-5}$ mbar.
- bombardement avec des ions argon de faible énergie : Ie=0,5A, V=80 V, durée 1 minute ;
- évaporation par effet Joule de l'OPTOOL DSX® (Taux d'évaporation 0,40nm/s) avec une remise finale à l'air lente (4 minutes)..

**Mesure des angles de contact avec l'eau**

On a mesuré les angles de contact de la surface nanotexturée selon l'invention comme décrit précédemment. Les résultats sont donnés dans le tableau I ci-dessous. A titre comparatif on a indiqué les angles de contact avec l'eau de la surface non nanotexturée d'une galette de silicium revêtue du matériau hydrophobe (mesures faites au DIGIDROP GBX, mode manuel-vitesse du point triple = 0).

**TABLEAU I**

| | Angle d'avancée | Angle de reculée | Hystérésis |
|---|---|---|---|
| Réseau 1 | 160° | 137° | 23° |

(suite)

| | Angle d'avancée | Angle de reculée | Hystérésis |
|---|---|---|---|
| Substrat de silicium | 121° | 117,4° | 3,6° |

L'intérêt de la nano structure est d'augmenter de façon très significative les angles à l'avancée et au retrait. L'hystérèse reste modeste ce qui montre que l'on est dans un état Cassie. Dans le cas d'un état Wenzel, l'hystérèse serait de l'ordre de 100 à 140°. De tels angles de reculée ne sont jamais obtenus avec des surfaces planes. Ces valeurs d'angles à l'avancée et au retrait permettent de garder les gouttes d'eau sphériques et sont suffisantes pour qu'elles rebondissent. Lorsque des gouttes se déposent sur ces surfaces. Elles s'éliminent alors très facilement en roulant dès qu'on incline la surface

**Résistance à l'impact de gouttes**

Le schéma du montage expérimental utilisé pour les expériences d'impact de gouttes est représenté en figure 1. Les gouttes sont lâchées d'une seringue pilotée par pousse-seringue. L'observation s'effectue par caméra rapide.

Une seringue 1 pilotée par un pousse-seringue permet de lâcher des gouttes de taille calibrée. On dispose la seringue de telle sorte que les gouttes tombent au-dessus de l'échantillon d'une hauteur H comme schématisé sur la figure 2.

L'observation de l'impact s'effectue au moyen d'une caméra rapide 2 à 1000 images par secondes. Les vues sont prises de profil en disposant l'éclairage 3 derrière un diffuseur 4 de manière symétrique à la caméra.

On a effectué des impacts de gouttes, de rayon variant de 1,1 à 2 mm de différentes hauteurs (de 3 cm à 1 m) sur la surface nanostructurée, et on a toujours observé des rebonds, même pour des gouttes lâchées de 1 m de haut. L'eau ne rentre pas dans la surface mais rebondit.

**Essai d'évaporation**

Une goutte posée sur les surfaces nanostructurées de l'exemple s'évapore en restant en état fakir jusqu'à atteindre la limite de résolution des expériences qui est de 20 μm (cette taille de goutte est celle de gouttes macroscopiques un peu plus grosses que de la buée). On observe l'évolution de ces gouttes grâce à une binoculaire disposée horizontalement de manière à regarder la goutte de profil.

Le comportement observé est très différent de celui observé avec des structures plus grosses pour lesquelles on constate un empalement des gouttes pour des tailles inférieures à une centaine de microns.

Conclusion : on n'observe pas d'empalement de gouttes pour la nanotexture de l'exemple:

**Revendications**

**1.** Article ayant une surface à propriétés superhydrophobes comportant un réseau de plots verticaux, de préférence réguliers, nanotexturée, **caractérisé en ce que** le réseau de plots satisfait les conditions suivantes :

- la fraction surfacique des plots $\varnothing_s$ est telle que $3\% \leq \varnothing_s \leq 13\%$, de préférence $5\% \leq \varnothing_s \leq 13\%$, mieux $5{,}5\% \leq \varnothing_s \leq 13\%$, mieux $6\% \leq \varnothing_s \leq 13\%$, et mieux encore $8\% \leq \varnothing_s$ 13% ;
- le pas p du réseau est tel que $100\text{nm} \leq p \leq 250$ nm ;
- la hauteur des plots h est telle que $100\text{nm} \leq h \leq 400$ nm, de préférence $250 \leq h \leq 400$ nm, mieux $300 \leq h \leq 400$ nm ;
- la surface latérale des plots étant au plus inclinée d'un angle de ± 20°, de préférence ± 10 °, mieux ± 5 °, par rapport à l'axe vertical des plots.

**2.** Article selon la revendication 1, **caractérisé en ce que** la hauteur des plots est telle que $150 \leq h \leq 350$ nm.

**3.** Article selon la revendication 1 ou 2, **caractérisé en ce que** la fraction surfacique des plots $\varnothing_s$ est telle que $5\% \leq \varnothing_s \leq 12\%$, mieux $6\% \leq \varnothing_s \leq 12\%$ ; et mieux encore $7\% \leq \varnothing_s \leq 12\%$.

**4.** Article selon la revendication 1 ou 2, **caractérisé en ce que** la fraction surfacique des plots est telle que $5\% \leq \varnothing_s \leq 10\%$ et mieux encore $8\% \leq \varnothing_s \leq 10\%$.

**5.** Article selon l'une quelconque des revendications précédentes **caractérisé en ce que** les plots sont des parallélépipèdes, des cylindres, des troncs de cônes ou des troncs de pyramide.

6. Article selon la revendication 5, **caractérisé en ce que** le plus grand côté ou le diamètre des plots varie de 50 nm à 100 nm ; de préférence est supérieur à 50 nm, mieux égal ou supérieur à 60 nm et mieux encore varie de 60 à 90 nm.

7. Article selon l'une quelconque des revendications précédentes, **caractérisé en ce que** le sommet des plots est de forme arrondie.8.

8. Article selon l'une quelconque des revendications précédentes, **caractérisé en ce que** la surface nanotexturée a une rugosité $r \geq 2$, de préférence $2,5 \leq r \leq 3,5$.

9. Article selon l'une quelconque des revendications précédentes, **caractérisé en ce que** la surface nanotexturée est au moins partiellement revêtue d'une couche d'un matériau hydrophobe.

10. Article selon la revendication 9, **caractérisé en ce que** la couche a une épaisseur inférieure à 10 nm, de préférence de 1 à 10nm, mieux de 1 à 5 nm.11.

11. Article selon l'une quelconque des revendications précédentes, **caractérisé en ce que** l'article est un article d'optique, de préférence une lentille ophtalmique.

12. Article selon l'une quelconque des revendications précédentes, **caractérisé en ce que** la surface nanostructurée constitue une couche anti-salissure.

13. Utilisation pour conférer des propriétés anti-pluie à une surface d'un article d'une surface nanostructurée comportant un réseau de plots selon l'une quelconque des revendications 1 à 12.

## Claims

1. An article having a nanotextured surface with superhydrophobic properties, comprising an array of, preferably regular, vertical pillars, **characterized in that** the array of pillars fulfils the following conditions:

   - the surface fraction of the pillars $\varnothing_s$ is such that $3\% \leq \varnothing_s \leq 13\%$, preferably $5\% \leq \varnothing_s \leq 13\%$, even better $5.5\% \leq \varnothing_s \leq 13\%$, even better $6\% \leq \varnothing_s \leq 13\%$, and still better $8\% \leq \varnothing_s \leq 13\%$;
   - the pitch p of the array is such that $100\text{nm} \leq p \leq 250$ nm;
   - the height h of the pillars is such that $100 \text{ nm} \leq h \leq 400$ nm, preferably $250 \text{ nm} \leq h \leq 400$ nm, and even better $300 \leq h \leq 400$ nm;
   - the lateral surface of the pillars makes at most an angle of $\pm$ 20°, preferably $\pm$ 10°, and even better $\pm$ 5°, with respect to the vertical axis of the pillars.

2. An article according to claim 1, **characterized in that** the height of the pillars is such that $150 \leq h \leq 350$ nm.

3. An article according to claim 1 or 2, **characterized in that** the surface fraction of the pillars $\varnothing_s$ is such that $5\% \leq \varnothing_s \leq 12\%$, even better $6\% \leq \varnothing_s \leq 12\%$; and even better $7\% \leq \varnothing_s \leq 12\%$.

4. An article according to claim 1 or 2, **characterized in that** the surface fraction of the pillars $\varnothing_s$ is such that $5\% \leq \varnothing_s \leq 10\%$, and even better $8\% \leq \varnothing_s \leq 10\%$.

5. An article according to any one of the preceding claims, **characterized in that** the pillars are parallelepipeds, cylinders, frustums of cone or frustums of pyramid.

6. An article according to claim 5, **characterized in that** the longer side or the diameter of the pillars varies from 50 nm to 100 nm; is preferably greater than 50 nm, even better equal to or greater than 60 nm, and still better it varies from 60 to 90 nm.

7. An article according to any one of the preceding claims, **characterized in that** the pillar apex has a rounded shape.

8. An article according to any one of the preceding claims, **characterized in that** the nanotextured surface has a

roughness $r \geq 2$, preferably $2.5 \leq r \leq 3.5$.

**9.** An article according to any one of the preceding claims, **characterized in that** the nanotextured surface is at least partially coated with a layer of hydrophobic material.

**10.** An article according to claim 9, **characterized in that** the thickness of the layer is smaller than 10 nm, preferably 1 to 10 nm, and better 1 to 5 nm.

**11.** An article according to any one of the preceding claims, **characterized in that** the article is an optical article, preferably an ophthalmic lens.

**12.** An article according to any one of the preceding claims, **characterized in that** the nanotextured surface is an anti-smudge.

**13.** The use of a nanostructured surface comprising an array of pillars according to any one of claims 1 to 12 to provide rain-repellent properties to a surface of an article.

**Patentansprüche**

**1.** Gegenstand mit einer superhydrophobe Eigenschaften aufweisenden Fläche, umfassend ein Netz oder Gitter an Vertikalstellen, bevorzugt regelmäßig, nanostrukturiert, **dadurch gekennzeichnet, dass** das Netz oder Gitter an den Stellen den folgenden Bedingungen genügt:

- der Oberflächenanteil der Stellen $\varnothing_S$ ist derart, dass $3\% \leq \varnothing_S \leq 13\%$, bevorzugt $5\% \leq \varnothing_S \leq 13\%$, bevorzugter $5{,}5\% \leq \varnothing_S \leq 13\%$, bevorzugter $6\% \leq \varnothing_S \leq 13\%$ und insbesondere bevorzugt $8\% \leq \varnothing_S \leq 13\%$;
- die Schrittweite p des Gitters oder Netzes derart, ist, dass $100nm \leq p \leq 250nm$;
- die Höhe der Stellen bzw, der Absätze h derart ist, dass $100nm \leq h \leq 400nm$, bevorzugt $250 \leq h \leq 400nm$, bevorzugter $300 \leq h \leq 400nm$;
- die Lateralfläche der Stellen bzw. Absätze höchstens bei einem Winkel von $\pm$ 20°, bevorzugt $\pm$ 10°; bevorzugter $\pm$ 5° mit Bezug auf die Vertikalachse der Stellen oder Absätze geneigt ist,

**2.** Gegenstand gemäß Anspruch 1, **dadurch gekennzeichnet**, dans die Höhe der Stellen oder Absätze derart ist, dass $150 \leq h \leq 350$ nm gilt.

**3.** Gegenstand gemäß Anspruch 1 oder 2, **dadurch gekennzeichnet, dass** der Oberflächenbruchteil bzw. - anteil der Stellen oder Absätze $\varnothing_S$ derart ist, dass gilt $5\% \leq \varnothing_S \leq 12\%$, bevorzugter $6\% \leq \varnothing_S \leq 12\%$ und insbesondere bevorzugt $7\% \leq \varnothing_S \leq 12\%$.

**4.** Gegenstand gemäß Anspruch 1 oder 2, **dadurch gekennzeichnet, dass** der Oberflächenanteil bzw. der Oberflächenbruchteil der Stellen oder Absätze derart ist, dass gilt $5\% \leq \varnothing_S \leq 10\%$ und insbesondere bevorzugt gilt $8\% \leq \varnothing_S \leq 10\%$.

**5.** Gegenstand gemäß einem der vorangegangen Ansprüche, **dadurch gekennzeichnet, dass** die Stellen oder Absätze Parallelepipede, Zylinder, Konusstümpfe oder Pyramidenstümpfe sind.

**6.** Gegenstand gemäß Anspruch 5, **dadurch gekennzeichnet, dass** die größte Seite oder der Durchmesser der Stellen bzw. Absätze variiert zwischen 50nm und 100nm, bevorzugt größer ist als 50nm, bevorzugter gleich oder größer ist als 60nm und insbesondere bevorzugt variiert zwischen 60nm und 90nm.

**7.** Gegenstand gemäß einem der vorangegangen Ansprüche, **dadurch gekennzeichnet, dass** der Scheitel oder Gipfel der Stellen oder Absätze von abgerundeter Form ist.

**8.** Gegenstand gemäß einem der vorangegangen Ansprüche, **dadurch gekennzeichnet, dass** die nanostrukturierte Fläche eine Rauhigkeit aufweist von $r \geq 2$, bevorzugt soll gelten $2{,}5 \leq r \leq 3{,}5$.

**9.** Gegenstand gemäß einem der vorangegangen Ansprüche, **dadurch gekennzeichnet, dass** die nanostrukturierte Fläche zumindest teilweise beschichtet ist mit einer Lage eines hydrophoben Materials.

**10.** Gegenstand gemäß Anspruch 9, **dadurch gekennzeichnet, dass** die Lauge eine Dicke aufweist von weniger als 10nm, bevorzugt von 1 bis insbesondere bevorzugt von 1 bis 5nm.

**11.** Gegenstand gemäß einem der vorangegangen Ansprüche, **dadurch gekennzeichnet, dass** der Gegenstand ein optischer Gegenstand, bevorzugt eine ophthalmische Linse ist.

**12.** Gegenstand gemäß einem der vorangegangen Ansprüche, **dadurch gekennzeichnet, dass** die nanostrukturierte Fläche eine Antiverschmutzungsschicht bildet.

**13.** Verwendung zur Bereitstellung von Antiregeneigenschaften bezüglich einer Fläche eines Gegenstandes einer nanostrukturierten Fläche, umfassend ein Netz bzw. Gitter an Stellen oder Absätzen gemäß einem der Ansprüche 1 bis 12.

Figure 1

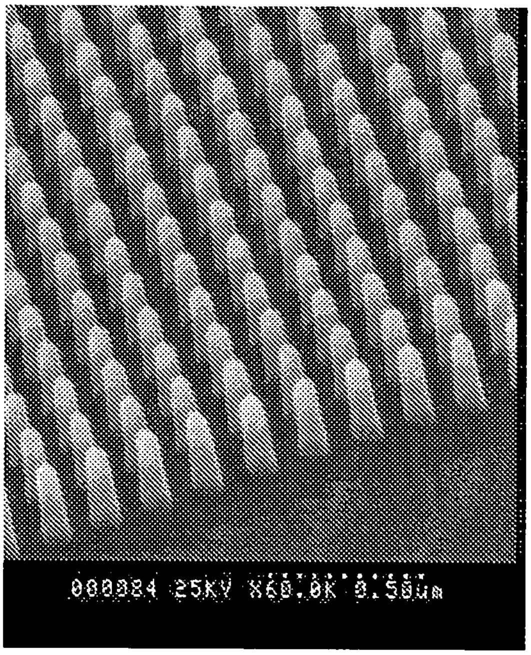


Figure 2

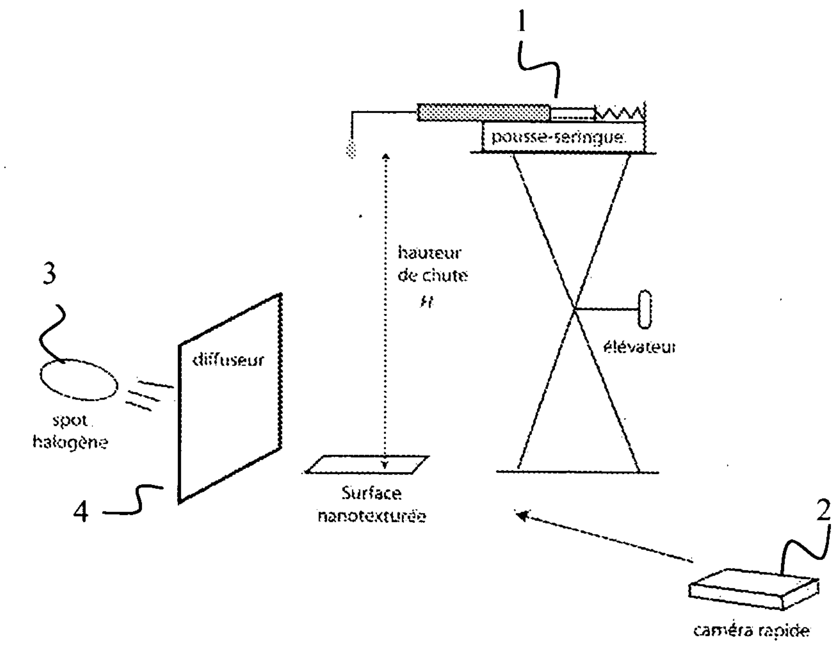

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6277485 B
- US 6183872 B
- WO 2006049020 A
- US 20050136217 A
- US 5081192 A
- US 5763061 A
- US 6183872 A
- US 5739639 A
- US 5922787 A
- US 6337235 B
- EP 0933377 A
- US 6491851 B
- EP 1551611 A


### Littérature non-brevet citée dans la description


- **E. Martines et al.** Superhydrophobicity and superhydrophilicity of regular nanopatterns. *NANOLETTERS,* 2005, vol. 5 (10), 2097-2103